Europäisches Patentamt

(19) European Patent Office

Office européen des brevets

(11) Publication number: **0 184 353**
**B1**

(12) **EUROPEAN PATENT SPECIFICATION**

(45) Date of publication of patent specification :
22.02.89

(21) Application number : **85308447.3**

(22) Date of filing : **20.11.85**

(51) Int. Cl.⁴ : **F 16 M 13/02**

(54) **Computer support.**

(30) Priority : **20.11.84 US 673511**

(43) Date of publication of application :
**11.06.86 Bulletin 86/24**

(45) Publication of the grant of the patent :
**22.02.89 Bulletin 89/08**

(84) Designated contracting states :
**AT BE CH DE FR GB IT LI NL SE**

(56) References cited :
**EP--A-- 0 027 001**
**IBM TECHNICAL DISCLOSURE BULLETIN, vol. 22,
no. 7, December 1979, pages 2631-2632, New York,
US; M.F. DAVIS, Jr.: "Adapter shelf"**

(73) Proprietor : **HAUSERMAN INC.**
**5711 Grant Avenue**
**Cleveland Ohio 44105 (US)**

(72) Inventor : **Ball, Douglas C.**
**88 Rue Ste-Anne**
**Ste-Anne-de-Bellevue Quebec H9X 1L8 (CA)**

(74) Representative : **Topps, Ronald**
**D. YOUNG & CO 10 Staple Inn**
**London WC1V 7RD (GB)**

## Description

This invention relates to a mounting unit for computer, related equipment and accesories and particularly to a corner mounting unit.

Computers and related equipment, such as word processors, are often positioned in a corner between two work surfaces extending at an angle, usually a right angle, to each other. This permits the operator to have access to both work surfaces as well as to the computer, the related equipment and certain accessories. To permit this there is often employed a third work top or a work surface between angled work surfaces. This is an expensive proposition requiring not only a complex work surface, but also complex and expensive supporting and interconnecting hardware.

Some space divider systems for office interiors utilize interconnected beams from which work surfaces may be supported in cantilever or extending fashion. It is much easier and simpler to support these surfaces one against the other at the same height at juxtaposed or abutted conditions without providing intermediate or third work surfaces and the associated hardware for corner computer installations.

It is desirable to provide a mounting unit for computers which can be positioned on one or more work surfaces at the same height and which will provide a slightly elevated mounting surface for a variety of computer or word processor components and related accessories, so that they can be firmly supported above the work surface at the desired elevation or position, while also providing a slightly lower forward tray for the keyboard or the like. Also, instead of providing a third top or work surface at such a corner which includes a fillet or bridging surface between work surfaces, it is more economical to provide an accessory which includes not only the mounting unit for the computer and related accessories, but also which provides a fillet bridging the intersection of the work surfaces so that the operator may utilize readily both work surfaces and the corner positioned computer or like equipment. Moreover, it is desirable that the unit, when attached, serve additionally to join, rigidify and stabilize the adjacent work surfaces.

IBM Technical Disclosure Bulletin, Vol 20, No 7, December 1979 pages 2631-2632, discloses an adapter shelf for supporting a business machine which is located at the intersection of two adjoining work surfaces and which extends over both surfaces. The shelf is provided with a slideable support for a keyboard.

According to the present invention there is provided a mounting unit for computer apparatus which can be positioned at the juncture of adjoining work surfaces extending at an angle to each other, said mounting unit comprising a base unit which in use extends over both said work surfaces, and a plate which extends forwardly of the base unit, characterised in that,

(a) the base unit has a top plate which in use extends over both said work surfaces and is provided with mounting means for fastening thereto at selected locations a variety of computer related equipment ;

(b) means are provided on the underside of said top plate for supporting said top plate from the work surfaces and a flange is provided along the forward portion of said top plate ;

(c) the plate comprises a bridging plate which in use extends between the front edges of the work surfaces at the corners therebetween and is held in position by said base unit, said plate being located at a lower elevation than said top plate and including an upturned flange at its rear edge captured behind said flange on the base unit, and a downturned forward edge which in use forms substantially a corner fillet continuation of the forward edges of the adjoining work surfaces, and

(d) clamping means for clamping said base unit to the adjoining work surfaces and thereby clamp and capture said bridging plate with said flange.

Computer or like equipment and suitable accessories may be quickly attached to such a mounting unit. The mounting unit includes a frame having a slightly elevated plate with attachments positioned at selected locations whereby computer components or accessories may be positioned and firmly supported directly or indirectly at any of such variety of locations. A keyboard or bridging surface is captured by the frame and extends forwardly of the unit at a lower elevation and serves to bridge the included angle between the adjoining work surfaces. A separable adjustable keyboard may be employed. Also, one or more adjustable monitor turntables or swing arm attachments may be secured to the unit to position the computer and components or accessories at the desired location for effective ergonomic use. The unit eliminates the need for an expensive and complex intermediate or third top and the requisite hardware. Preferably a bridging clamp is provided at the intersection of the work surfaces so that the unit serves additionally to join, rigidify and stabilize such work surfaces.

Some embodiments of the invention will now be described, by way of example, with reference to the accompanying drawings, in which :

Figure 1 is an exploded perspective view of one embodiment of the present invention illustrating some of the computer or accessory supports which may be mounted thereon ;

Figure 2 is an enlarged plan view of the mounting unit as shown in Figure 1 without the computer component or accessory supporting units mounted thereon ;

Figure 3 is a somewhat enlarged quarter section through the mounting unit as taken along the line 3-3 indicated on Figure 2 ;

Figure 4 is a horizontal section of the leading edge of the keyboard tray or fillet unit as taken along the line 4-4 indicated on Figure 3 ;

Figure 5 is an enlarged section taken substantially along the line 5-5 indicated on Figure 2 ;

Figure 6 is a fragmentary transverse section through one form of turntable illustrating a mechanism for both the rotation and fore and aft movement ;

Figure 7 is a fragmentary side elevation of a swing arm which may be mounted on the mounting unit for supporting a monitor for both horizontal positioning and angular adjustment ;

Figure 8 is an enlarged transverse axial section taken along the line 8-8 indicated on Figure 7 ;

Figure 9 is a vertical axial section taken along the line 9-9 indicated on Figure 7 ;

Figure 10 is a view similar to that of Figure 1 illustrating the employment of the mounting unit with an adjustable keyboard ;

Figure 11 is a view similar to that of Figure 6 illustrating the turntable shown in Figure 1 adapted to fit on stamped tracks in the top of the mounting unit ; and

Figure 12 is a view similar to that of Figures 11 and 6 illustrating a more simplified turntable which rotates only.

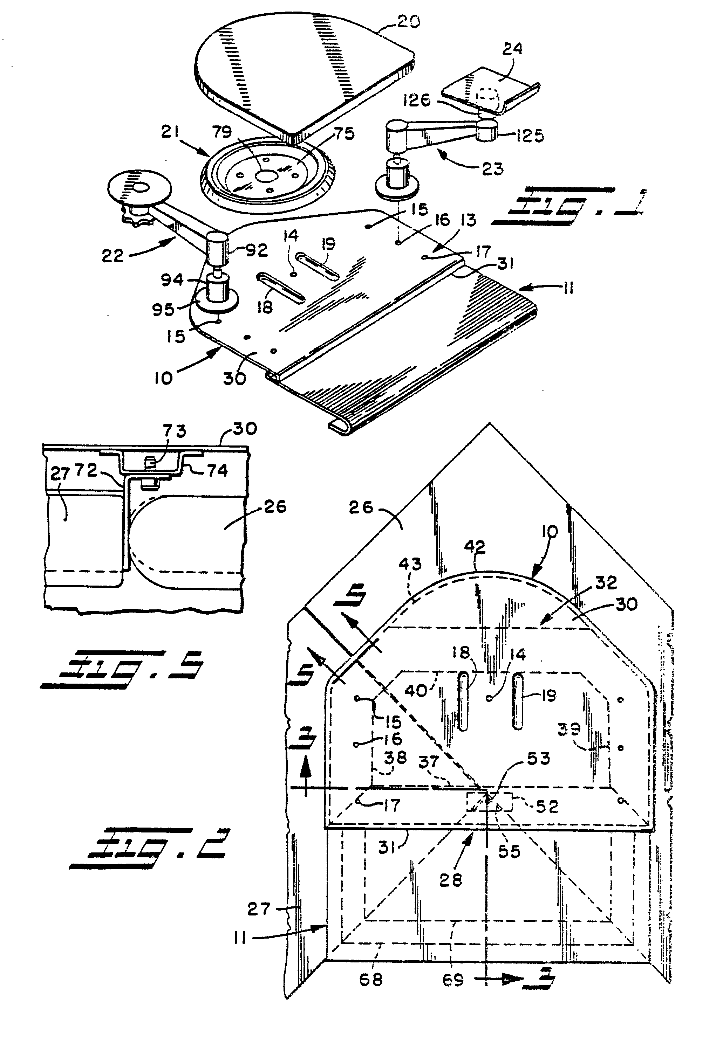

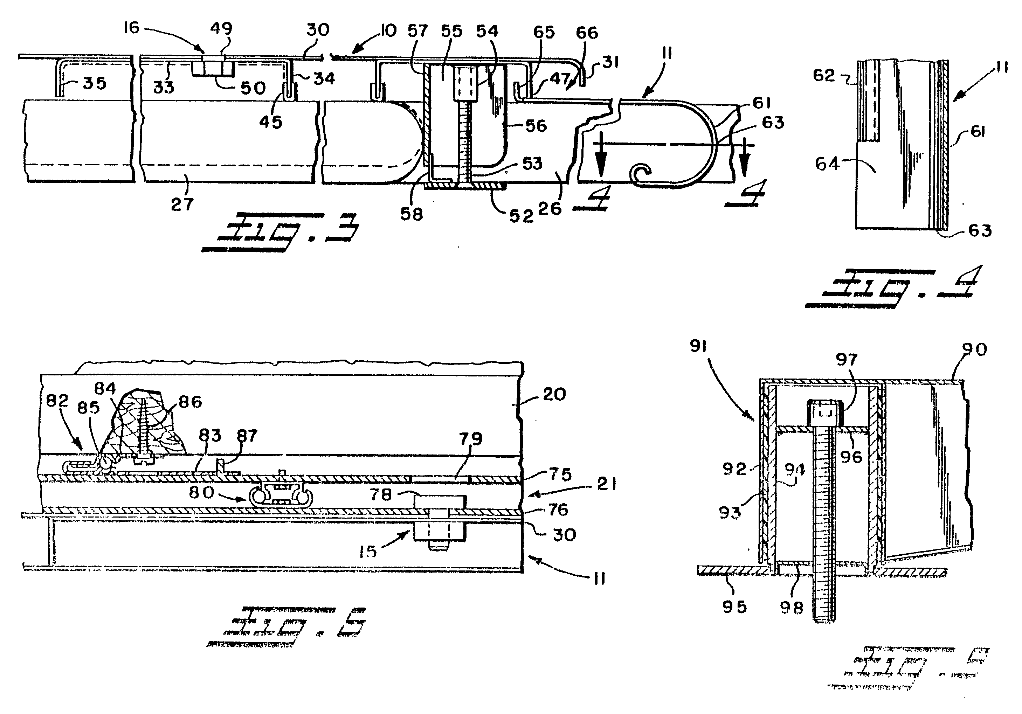

Referring first to Figures 1 and 2 it will be seen that the mounting unit of the present invention comprises what may be termed a frame or base 10 and a keyboard support 11 at a somewhat lower elevation. The frame or base 10 is provided with attachments indicated generally at 13 positioned at selected locations whereby computer components or accessories may be positioned and firmly supported directly or indirectly at any of such variety of locations. As indicated, there is one such attachment positioned in the centre of the base 10 as seen at 14 and three on each side of the base 10 as seen at 15, 16 and 17, or seven altogether. Also, on each side of the centre attachment 14 are parallel stamped depressions or tracks 18 and 19 enabling a turntable to move toward and away from the user.

Figures 1 also illustrates by way of example some of the accessories which may be mounted on and fixed to the base 10 by means of the attachments 13. One accessory may be a monitor or CRT support 20 which may be positioned on top of a turntable 21 permitting the monitor or CRT support 20 not only to rotate but also to be moved towards and away from the user. Also illustrated is an accessory in the form of a swing arm support 22 shown in greater detail in Figures 7, 8 and 9 which may be used to support a screen or monitor either in lieu of the support 20 or in addition thereto. Also illustrated is an accessory in the form of a swing arm support 23 for a telephone pad 24, copyholder or other member requiring support.

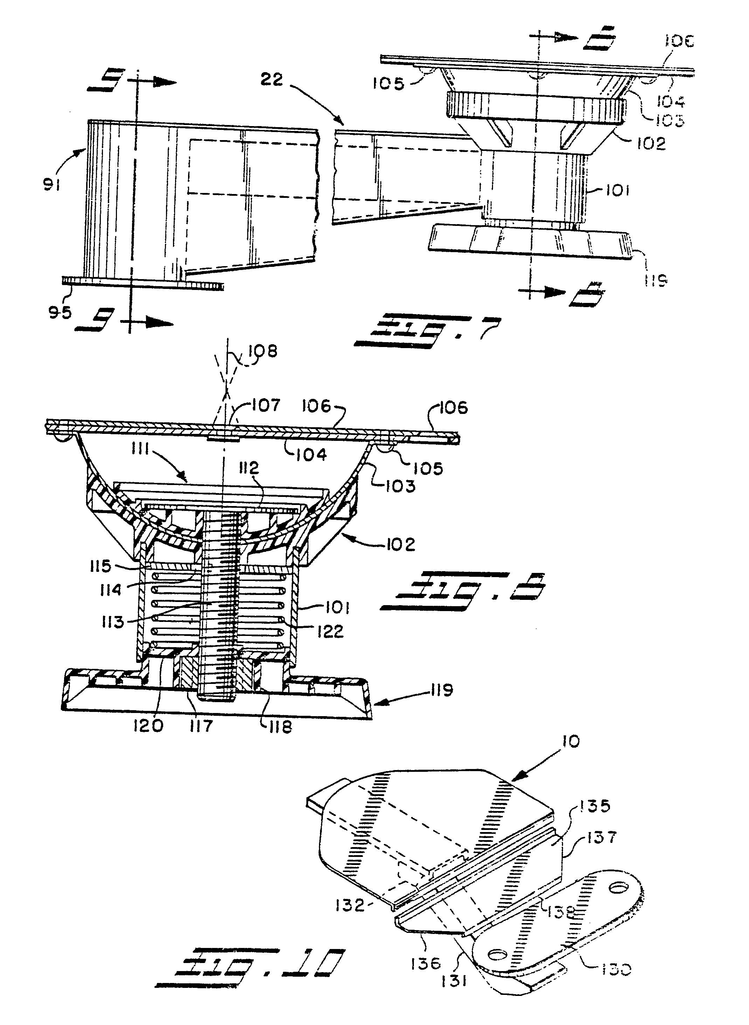

As seen more clearly in Figures 2 and 3, the corner mounting unit is designed for quick attachment to two adjoining work surfaces 26 and 27 which are at the same height. Such work surfaces 26 and 27 may, for example, be supported in the manner shown and illustrated in applicant's EP-A-0 027 001. Such system is marketed by Sunar Hauserman of Cleveland, Ohio, U.S.A. under the trademark RACE.

It is noted that the work surfaces 26, 27 may have rounded or rectangular edges and that one end edge of the work surface 27 abuts the front edge of the work surface 26 and forms a corner indicated generally at 28 having an included angle of 90°. Although the work surface configuration illustrated is perhaps the most common, it will be appreciated that other corner configurations may be employed having different angles between the front edges of the work surfaces. Other common corner configurations are 120° and 130°. These are now normally closed with a five-sided third work surface which can be omitted and normally occupied by the third work surface.

The base unit 10 includes a top plate 30 having a downturned front edge 31. The underside of the planar top plate 30 has secured thereto inverted channels or U-shaped members which include top plates or webs 33 and downwardly extending inner and outer legs 34 and 35, respectively. The channel or U-shaped members extend across the front of the base 10 as seen at 37, along the sides of the base 10 as seen at 38 and 39 and across the back of the base 10 as seen at 40. A further channel or U-shaped member extends between the front and back in the middle as seen at 41. Also, the top plate 30 at the back of the base is curved as indicated at 42 and a depending skirt 43 is provided slightly inwardly spaced from and concentric with the curvature of the top plate 30.

As seen more clearly in Figure 3, the inner legs 34 of the channel or U-shaped members are edged with a plastics extrusion 45 to protect the tops of the work surfaces 26, 27. Such extrusions 45 also serve to raise the lower edge 47 of the front or outer leg 35 of the front channel or U-shaped member form slightly above the tops of the work surfaces as indicated.

Also as seen more clearly in Figure 3, the attachment points 13 are provided by aligned holes in the top plate 30 and the web of the channels or U-shaped members as seen at 49 and screw-threaded receivers concentric with the aligned holes.

The base unit is clamped to the work surfaces 26, 27 at the juncture thereof by means of a rectangular clamping plate 52 which is supported by a flush head fastener 53 which is in screw-threaded engagement within a lug 54 secure to the underside at the centre of the front channel or U-shaped member. Also secured at the centre of such channel or U-shaped member is a V-shaped locator 55 which includes depending walls 56 and 57 parallel to the front edges of the respective work surfaces 26 and 27. The clamping plate 52 is also provided with a reference projection seen at 58 which simply assists in locating the clamping plate 52 in the proper position as seen in Figure 2 extending beneath both work surfaces 26, 27 at the crotch therebetween.

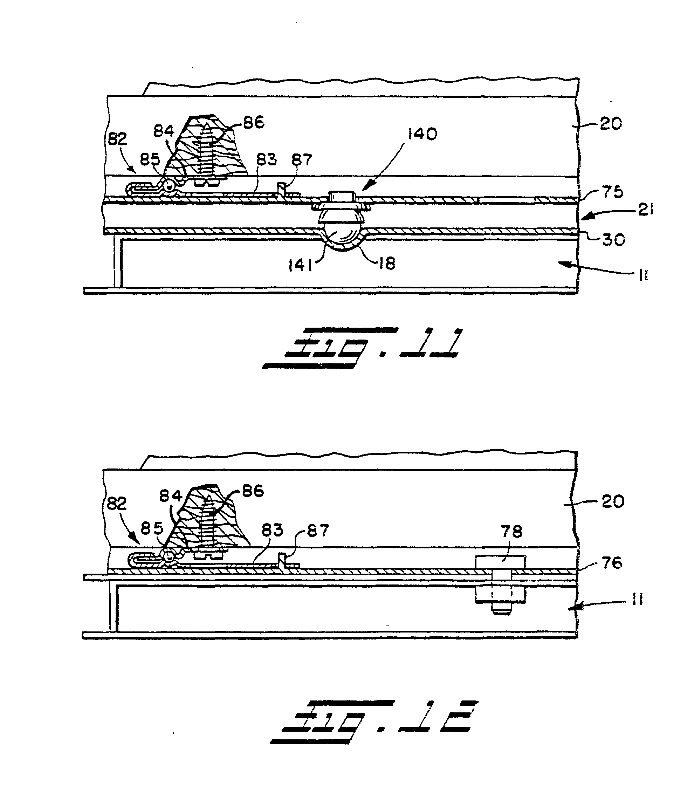

The keyboard support 11 includes a top planar surface to with a roller front edge 61 with the botton inside edge curled as seen at 62. The curled bottom edge 62 does not extend to the lateral edge providing a flat undersurface 64 as seen in Figure 4 at the corners such that the keyboard support 11 goes right around and underneath the work surfaces 26, 27. In this manner, the front edge of the keyboard support 11 cannot lift up.

The back of the keyboard support 11 is provided with an upturned flange 65 which simply fits quite snugly beneath the edge 47 of the front leg of the front channel or U-shaped member. In this manner when the base unit 10 is clamped or captured in position by the clamping plate 52 the keyboard support 11 is also clamped or secured in place. It is captured not only along the back edge, but also at the front corners by the part which fits beneath the work surfaces 26, 27.

The space indicated at 66 between the downturned front edge 31 of the top plate of the base unit 10 provides a wire receiving chamber and the clearance between the downturned edge of the base top plate and the top of the keyboard support 11 provides wire access to that chamber. Also, as seen in Figure 2, the size of the keyboard support 11 may vary with the keyboard support 11 illustrated in full lines being the largest and the same width as the base unit 10. Somewhat smaller keyboard supports are indicated by the dotted lines 68 and 69.

In Figure 5 there is illustrated a removable locater clip 72 which is secured by a fastener 73 to a bracket 74 provided on the underside of the overhanging edge of the top plate 30. The clip 72 is simply a depending tab which is aligned with one wall of the V-shaped locator 55 to assist in properly positioning the unit. A mounting for such a locator clip 72 may be provided on both sides of the unit but will only be normally used on one side and only if required. The locator clip 72 simply projects downwardly between the adjacent work surfaces 26, 27 to ensure the desired position.

Referring now to Figure 6, it will be seen that one form of turntable 21 for supporting a video display terminal (VDT) support 20 comprises simply upper and lower annular plates 75 and 76 with the lower plate 76 being secured to the base unit 10 at one of the latteral fastenings 15 by fastener 78 acess to which is provided through an access hole 79. The two annular plates 75, 76 are interconnected by roller tracks 80 so that the top plate 75 may move fore and aft or toward and away from the user. The support 20 is mounted on the top plate 75 as indicated at 82 and includes a fixed lower portion 83 and a revolving upper portion 84 with turntable ball bearings being provided at 85. The upper portion is secured by fasteners 86 to the monitor support 20. A locating pin 87 is provided which projects upwardly from the top plate 75. In this manner the monitor or video screen is supported both for horizontal swinging movement about the vertical axis of the top plate 75 while the entire unit may be moved toward and away from the viewer to the extent permitted by the roller tracks 80. The embodiment of Figure 6 permits mounting one screen supporting surface in a lateral fastening or mounting hole, or two screen supporting surfaces each in lateral mounting holes and provides both rotational as well as back and forth movement.

Referring now to Figures 7, 8 and 9, there is illustrated the swing arm unit 22 which also may be used to support a video screen and which provides a greater range or horizontal adjustment as well as angular adjustment. The swing arm unit 22 includes a radially extending arm 90. The arm 90 may be of tubular configuration provided with an interior gusset for torsional rigidity and at its inner end 91 is provided with a cylindrical downwardly extending tubular socket 92 which slides over a plastics spacer sleeve 93 which is mounted on the outside of a relatively thick wall cylindrical capstan 94 which projects upwardly from an annular base 95. The upper end portion of the capstan 94 is provided with a mounting flange 96 through which a headed bolt 97 passes, the flange 96 being positioned to limit the penetration of the bolt 97 below the base 95. The bolt 97 also passes through spacer 98. In this manner the bolt 97 is used to secure firmly the capstan 94 at a selected one of the fastenings, such as the fastening 15 seen in Figure 1.

The outer end of the arm 90 is secured to a cylindrical housing 101 which extends vertically and mounted on top of which is an outside or bottom plastics washer 102 which has a hemispherical top surface. Supported on top of the outside washer 102 is a hemi-spherical cup 103 which is secured to a plate 104 by fasteners 105. The plate 104 is in turn secured to a plate 106 by a flush head pin 107 which permits the plate 106 to rotate about the axis 108 of the pin 107. The plate 106 is in turn secured to the underside of the monitor support by flush head fasteners which extend through holes indicated at 109.

Mounted on the inside of the cup 103 is an inner plastics washer 111 in which is seated the head 112 of a T-bolt 113. The shank of the T-bolt 113 is provided with a key-way in which a key 114 fits, such key 114 being mounted on a flange 115 secured to the cylindrical wall 101. At the lower end of the threaded shank of the bolt 113 is provided a nut 117 captured in a hexagonal housing 118 in a moulded handle 119. The handle 119 includes a wall 120 closing the bottom of the cylindrical housing 101. A compression spring 122 extends between the flange 115 and the wall 120 of the handle 119. The spring 122 generates a constant compression at any given setting of the handle 119 and in this manner the cup 103 may be locked in a desired tilt position or released for readjustment and locked again. If the spring 122 is adjusted properly the monitor support may be manually adjusted and it will stay in that position. The mechanism thus illustrated then permits the monitor support to be tilted universally from its vertical axis in a quick and convenient manner.

The swing arm support 23 shown in Figure 1 may be constructed at its inner end in a manner similar to that as illustrated in Figure 9 with its outer end simply beng provided with a cup or sleeve into which downwardly projecting pintel 126 on the copyholder or pad 24 fits. In its simplified form the arm 23 swings about its proximal vertical axis. The pad or copyholder may also swing about its vertical distal axis.

Referring now to Figure 10 there is illustrated a base unit 10 of the present invention provided with an adjustable keyboard 130. The keyboard 130 is mounted on an arm 131 which is in turn mounted on a commercially available adjustment mechanism indicated generally at 132 which may be supported beneath the corner work tops. The base unit 10 is similar to that illustrated and hereinbefore described with reference to Figures 1 to 5 and the bridging surface 135 is similar to the bridging surface 10 and is provided with cropped or angied lateral edges 136 and 137 which in turn places the rolled leading edge 138 closer to the corner providing more room for the adjustable keyboard tray 130.

Referring now to Figures 11 and 12, there is illustrated two additional embodiments of a turntable screen support. The embodiment of Figure 11 is essentially that shown in Figure 1 and utilizes four ball castors shown generally at 140 mounted on upper plate 75 with the balls 141 of an aligned pair riding in a stamped track 18. The other aligned pair rides in track 19. The turntable simply sits in the tracks 18 and 19 and remains there of its own weight. This configuration is used to mount one screen surface to the centreiine position and provides both rotational and back and forth movement. It may be employed whether the unit is used as a corner unit or simply positioned on top of any work surface.

In Figure 12, the upper plate 75 is omitted and the plate 76 directly supports the turntable 20. The plate 76 is secured by fastener 78 either to a centreline or lateral position and provides no back and forth movement. This configuration permits one screen position in the centre or one or two at lateral positions.

It will be appreciated that the unit 10 may be placed in a wide variety of positions and utilization of a number of components or accessories can be made with the present invention. For example, two side-by-side turntables may be mounted on the unit 10 using the lateral attachments.

## Claims

1. A mounting unit for computer apparatus which can be positioned at the juncture of adjoining work surfaces (26, 27) extending at an angle to each other, said mounting unit comprising a base unit (10) which in use extends over both said work surfaces (26, 27), and a plate (11) which extends forwardly of the base unit (10), characterised in that,

(a) the base unit (10) has a top plate (30) which in use extends over both said work surfaces (26, 27) and is provided with mounting means (14-17) for fastening thereto at selected locations a variety of computer related equipment ;

(b) means (33) are provided on the underside of said top plate (30) for supporting said top plate (30) from the work surfaces (26, 27) and a flange (31) is provided along the forward portion of said top plate (30) ;

(c) the plate (11) comprises a bridging plate which in use extends between the front edges of the work surfaces (26, 27) at the corners therebetween and is held in position by said base unit, said plate (11) being located at a lower elevation than said top plate (30) and including an upturned flange (65) at its rear edge captured behind said flange (31) on the base unit (10), and a downturned forward edge (61) which in use forms substantially a corner fillet continuation of the forward edges of the adjoining work surfaces (26, 27), and

(d) clamping means (52, 53) for clamping said base unit (10) to the adjoining work surfaces (26, 27) and thereby clamp and capture said bridging plate (11) with said flange (31).

2. A mounting unit as claimed in claim 1, in which said means (33) comprise inverted channels secured to the underside of said plate (30).

3. A mounting unit as claimed in claim 2, including extrusions (45) provided on at least some of the flanges of said channels.

4. A mounting unit as claimed in any preceding claim, in which said mounting means (14-17) comprises screw-threaded receivers (50) secured to the underside of said top plate (30), and aligned with holes (49) extending through said top plate (30).

5. A mounting unit as claimed in any preceding claim, including guide means (57) on said base unit (1) operative to locate said base unit (10) with respect to said adjoining work surfaces (26, 27).

6. A mounting unit as claimed in any preceding claim, in which said clamp means (52, 53) comprises a clamping plate (52) vertically movable with respect to said base unit (10) and arranged to underly both work surfaces (26, 27) and means (58) to position said clamping plate.

7. A mounting unit as claimed in any preceding claim, in which the top plate (30) extends forwardly and is then downwardly turned to form a wire receiving chamber (66) in co-operation with the top of the bridging plate (11), the edge of the downwardly turned top plate being sufficiently spaced from the top of the bridging plate (11) to form a wire clearance.

## Patentansprüche

1. Tragvorrichtung für eine Computeranlage zur Anordnung an der Verbindungsstelle zweier in einem Winkel aneinander stoßender Arbeitsflächen (26, 27), welche Tragvorrichtung einen Grundteil (10), der sich, wenn montiert, über beide genannten Arbeitsflächen (26, 27) erstreckt, und eine Platte (11) umfaßt, die sich vom Grundteil (10) nach vorne erstreckt, dadurch gekennzeichnet, daß

a) der Grundteil (10) eine Deckplatte (30) aufweist, die sich, wenn montiert, über beide genannten Arbeitsflächen (26, 27) erstreckt und mit Montagemitteln (14-17) für die Befestigung verschiedener dem Computer zugehöriger Ausstattungsteile an ausgewählten Stellen versehen ist,

b) Mittel (33) an der Unterseite der genannten Deckplatte (30) vorgesehen sind, um die genannte Deckplatte (30) im Abstand zu den Arbeitsflächen (26, 27) zu stützen, und ein Flansch (31) entlang des vorderen Bereiches der genannten Deckplatte (30) vorgesehen ist,

c) die Platte (11) eine Überbrückungsplatte darstellt, die sich, wenn montiert, zwischen den vorderen Rändern der Arbeitsflächen (26, 27) in deren Ecke erstreckt und vom Grundteil gehalten wird, wobei die Platte (11) tiefer als die genannte Deckplatte (30) angeordnet ist, und einen nach oben gerichteten, den Flansch (31) am Grundteil (10) hintergreifenden Flansch (65) an ihrer Rückseite sowie einen nach unten gerichteten vorderen Rand (61) aufweist, der im wesentlichen ein die Ecke überspannendes Einsatzstück der vorderen Ränder der aneinander stoßenden Arbeitsflächen (26, 27) bildet, und

d) Klemmittel (52, 53) vorgesehen sind, um den Grundteil (10) auf die aneinander stoßenden Arbeitsflächen (26, 27) zu klemmen, wodurch die genannte Überbrückungsplatte (11) hinter dem genannten Flansch (31) geklemmt und gehalten wird.

2. Tragvorrichtung nach Anspruch 1, in welcher die genannten Mittel (33) an der Unterseite der genannten Deckplatte (30) umgekehrt fixierte Kanäle aufweisen.

3. Tragvorrichtung nach Anspruch 2, die an zumindest einigen der Stege der genannten Kanäle Verlängerungen (45) aufweist.

4. Tragvorrichtung nach einem der vorangehenden Ansprüche, in welcher die genannten Montagemittel (14-17) an der Unterseite der genannten Deckplatte (30) angeordnete Gewindeaufnahmen (50) umfassen, die mit Löchern (49) der genannten Deckplatte (30) fluchten.

5. Tragvorrichtung nach einem der vorangehenden Ansprüche, die Führungsmittel (57) am Grundteil (10) aufweist, mittels denen der genannte Grundteil (10) an den aneinanderstoßenden Arbeitsflächen (26, 27) ausrichtbar ist.

6. Tragvorrichtung nach einem der vorangehenden Ansprüche, in welcher die genannten Klemmittel (52, 53) eine vertikal zum genannten Grundteil (10) bewegliche Klemmplatte (52) für die unterseitige Anlage an beiden Arbeitsflächen (26, 27) und Mittel (58) zur Positionierung der genannten Klemmplatte umfassen.

7. Tragvorrichtung nach einem der vorangehenden Ansprüche, in welcher die Deckplatte (30) sich nach vorne erstreckt und dann nach unten gebogen ist und zusammen mit der Oberseite der Überbrückungsplatte (11) eine Kabelaufnahmekammer (66) bildet, wobei der Rand der nach unten gebogenen Deckplatte von der Oberseite der Überbrückungsplatte (11) ausreichend beabstandet ist, um einen Kabelspalt zu bilden.

## Revendications

1. Ensemble de montage pour appareil du type ordinateur pouvant être placé à la jonction de surfaces de travail (26, 27) attenantes faisant un angle l'une avec l'autre, ledit ensemble de montage comprenant un ensemble socle (10) qui en service s'étend par dessus les deux susdites surfaces de travail (26, 27) et une plaque (11) qui s'étend vers l'avant de l'ensemble socle (10), caractérisé en ce que :

(a) l'ensemble socle (10) comporte une plaque de dessus (30) qui s'étend en service par dessus les deux susdites surfaces de travail (26, 27) et est pourvu de moyens de montage (14, 17) permettant de lui fixer en des emplacements choisis divers équipements associés à l'ordinateur ;

(b) des moyens (33) sont prévus sur le dessous de ladite plaque (30) pour supporter celle-ci à partir des surfaces de travail (26, 27) et un rebord (31) est prévu le long de la partie avant de ladite plaque (30) ;

(c) la plaque (11) comprend une plaque de pontage qui s'étend en service entre les bords avant des surfaces de travail (26, 27) dans les coins définis entre celles-ci et est maintenue en place par ledit ensemble socle, cette plaque (11) étant située plus bas que ladite plaque de dessus (30) et comportant sur son bord arrière un rebord tourné vers le haut (65) emprisonné derrière ledit rebord (31) de l'ensemble socle et un bord avant tourné vers le bas (61) qui constitue sensiblement en service un prolongement de comblement de coin des bords avant des surfaces de travail attenantes (26, 27) et

(d) un moyen de cramponnement (52, 53) permettant de cramponner ou fixer ledit ensemble de base (10) sur les surfaces de travail attenantes (26, 27) et par là de cramponner et de maintenir captive ladite plaque de pontage (11), au moyen dudit rebord (31).

2. Ensemble de montage selon la revendication 1, caractérisé en ce que lesdits moyens (33) sont constitués par des gouttières renversées fixées au-dessous de ladite plaque (30).

3. Ensemble de montage selon la revendication 2, caractérisé en ce qu'il comporte des profilés (45) prévus sur l'une au moins des ailes desdites gouttières.

4. Ensemble de montage selon l'une quelconque des revendications précédentes, caractérisé en ce que lesdits moyens de montage (14, 17) comprennent des récepteurs taraudés (50) fixés au-dessus de ladite plaque de dessus (30) et alignés avec des trous (49) traversant ladite plaque de dessus (30).

5. Ensemble de montage selon l'une des revendications précédentes, caractérisé en ce qu'il comporte un moyen de guidage (57), porté par ledit ensemble socle (10), assurant le positionnement dudit ensemble socle (10) par rapport auxdites surfaces de travail attenantes (26, 27).

6. Ensemble de montage selon l'une des revendications précédentes, caractérisé en ce que ledit moyen de cramponnement (52, 53) est constitué par une plaque de cramponnement (52) mobile verticalement par rapport audit ensemble socle (10) et agencée pour s'étendre sous les deux surfaces de travail (26, 27) et par un moyen (58) de positionnement de ladite plaque de cramponnement.

7. Ensemble de montage selon l'une des revendications précédentes, caractérisé en ce que la plaque de dessus (30) s'étend vers l'avant et se rabat ensuite vers le bas pour définir une chambre de réception de fils (66) en coopération avec le dessus de la plaque de pontage (11), le bord de la plaque de dessus rabattue vers le bas étant suffisamment espacé du dessus de la plaque de pontage (11) pour définir un interstice de passage de fils.

FIG.1

FIG.5

FIG.2

1

Fig. 1

Fig. 2

Fig. 3

Fig. 5

FIG. 7

FIG. 8

FIG. 10

*Fig. 11*

*Fig. 12*